# EUROPÄISCHE PATENTSCHRIFT

(11) **EP 2 726 269 B1**
(45) Veröffentlichungstag und Bekanntmachung des Hinweises auf die Patenterteilung: **18.09.2019**
(21) Anmeldenummer: 12733053.8
(22) Anmeldetag: 28.06.2012
(51) Int. Cl.: B29C 51/34, B65D 43/02

(54) **VERFAHREN ZUR HERSTELLUNG EINES THERMOGEFORMTEN ARTIKELS UND EIN SOLCHER ARTIKEL**
METHOD OF MANUFACTURING A THERMOFORMED ARTICLE AND THE ARTICLE
PROCÉDÉ POUR MANUFACTURER UN PRODUIT THERMOFORMÉ ET LE ARTICLE

(30) Priorität: 28.06.2011 DE 102011051402
(43) Veröffentlichungstag der Anmeldung: 07.05.2014
(73) Patentinhaber: RPC Bebo-Plastik GmbH, 27432 Bremervoerde (DE)
(72) Erfinder: MERBACH, Juergen, 21682 Stade (DE)
(74) Vertreter: Leonhard, Frank Reimund
(86) Internationale Anmeldenummer: PCT/EP2012/062580
(87) Internationale Veröffentlichungsnummer: WO 2013/001008

(56) Entgegenhaltungen:
- WO-A1-2010/146997
- WO-A2-2004/106162
- DE-A1-102004 039 814
- DE-U1-202010 016 248
- US-A- 3 267 521
- US-A- 3 618 170
- US-A- 4 822 553

## Beschreibung

Die Erfindung betrifft einen thermogeformten Verpackungsartikel als Behälter oder Behälterdeckel. An derartigen Artikeln sind in radialer Richtung vorstehende Gewindesegmente bzw. Knaggensegmente ausgebildet, um gewinde- oder bajonettverschlussartige Strukturen und damit eine Verschließmöglichkeit des (gesamten) Artikels vorzusehen.

Nach dem Stand der Technik werden thermogeformte Verpackungsartikel, wie Becher und Schalen zur Verpackung von Lebensmitteln mittels einer Siegelfolie versiegelt und gegebenenfalls mit einer Kartonmanschette oder einem Umkarton verpackt oder zusätzlich mit einem Stülpdeckel versehen. Das Verschließen mittels Siegelfolie ist notwendig, um eine Abdichtung gegenüber der Umgebung zu erzielen. Allein durch Verwendung einer Umverpackung oder eines Stülpdeckels kann ein Verpackungsartikel nach dem Stand der Technik nicht dicht verschlossen werden. Der Sitz eines Deckels auf dem Behälter ist unter anderem abhängig von Randaußenmaßen des Behälters, dem Passmaß des Deckels sowie Ausführung, Position und Anzahl von Noppen, die den Deckel am Behälter halten. Insgesamt ist der Deckelsitz Schwankungen unterworfen, die gegebenenfalls durch Schwindungen und Verformungen aufgrund eines Sterilisationsprozesses während oder nach der Befüllung des Verpackungsartikels mit Lebensmitteln überlagert werden. Derartige Schwindungen oder Verformungen können vom Verpackungshersteller nicht berücksichtigt und beeinflusst werden.

Die zwingende Verwendung einer (alleinigen) Versiegelung zum dichten Verschließen des Verpackungsartikels bringt Nachteile mit sich, beispielsweise in Form eines erhöhten Fertigungs- und Materialaufwands. Ein einmal geöffneter Verpackungsartikel (Behälter und Deckel) sind nicht erneut dicht wiederverschließbar, wodurch mögliche Verwendungen und Füllgrößen des Verpackungsartikels beschränkt werden.

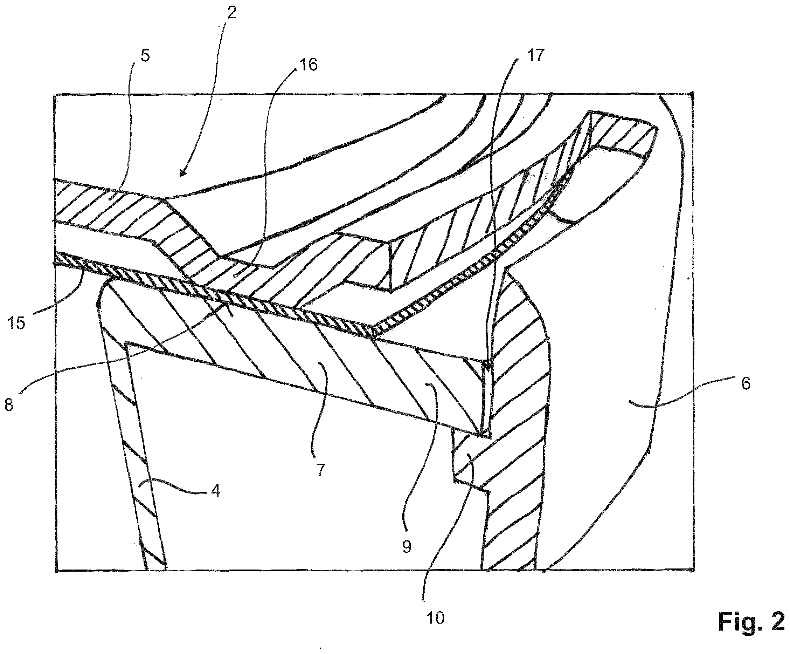

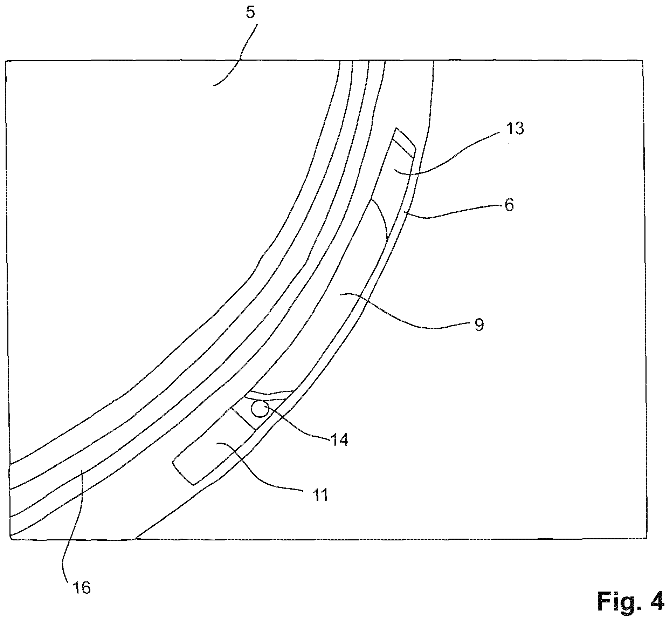

Aus der WO 2004/106162 ist ein Verfahren zum Herstellen von thermogeformten Artikeln dem Fachmann zugänglich, vgl. dort insbesondere die Figuren 10a bis 10g, wie auch die dadurch hergestellten Artikel in den dortigen Figuren 22 bis 25. Aus einem zugeführten Verpackungsfilm werden einzelne Filmsegmente, dort 1a, ausgeschnitten oder abgeschnitten, die nach einem Vorheizen über einzelne Vorheizplatten, dort Seite 12, letzter Absatz, dem Thermoformen zugeführt werden. Die einzelnen Schritte dieses Vorgangs sind aus den genannten Figuren 10a bis 10g ersichtlich. US 3,267,521 zeigt auch ein plastic sheet, dort 25, das mehreren Werkzeugen, die aus oberem Werkzeug und unterem Werkzeug bestehen, zugeführt wird, um Behälter zu erzeugen, die der dortigen Figur 9 entsprechen. Sie haben geneigte, beim Thermoformen ausgebildete Gewindesegmente, dort 146, die umfänglich beabstandet angeordnet, aber alle geneigt sind. Die US 4,822,553 zeigt auch das Ausformen von Hinterschneidungen in der dortigen Figur 2 und Figur 5c bei einem Kunststoffartikel, der aber nur Gewinde oder ein horizontal durchgehend umlaufendes Segment, dort undercut portion 18a, Spalte 4, Zeilen 1 bis 24, offenbart. Aus der US 3,618,170 ist eine Gewindeformung bekannt, die eine internally-threaded plastic cover 10, dort Figur 5, mit beabstandeten, umfänglich geneigt ausgerichteten Gewindesegmenten in einem topfförmigen Gebilde (dort cover) herstellt, ausgeformt aus einem zugeführten plastic strip 23, wobei das die Thermoformung vornehmende Werkzeug zunächst die gestaltende Formung übernimmt, dabei ein Innengewinde einbringt und das Lösen des thermisch geformten Kappenteils durch ein Einklappen der die Gewinde ausformenden Werkzeugsegmente ermöglicht wird, dort Figur 4 und Spalte 5, Zeilen 39 bis 60.

Der beanspruchten Erfindung **liegt die Aufgabe zugrunde,** einen thermogeformten Verpackungsartikel in Form eines Behälters oder Behälterdeckels zu schaffen, die ohne zwingende Verwendung einer Versiegelung dicht verschließbar und insbesondere nach einem Erstgebrauch dicht wiederverschließbar sind. Es soll eine bessere Dichtigkeit erzielt werden.

Anspruch 1 löst das Problem.

Die Erfindung wird mit Bezug auf einen "thermogeformten Artikel" erläutert. Die Bezeichnung "Artikel" ist so zu verstehen, dass damit der Verpackungsartikel als Behälter im weitesten Sinne und Behälterdeckel bezeichnet werden.

Die Artikel weisen im Allgemeinen einen Artikelboden und eine Artikelwandung auf, mit welchen Bezeichnungen demnach auch Behälterboden, Behälterwandung, Deckelboden und Deckelwandung bezeichnet werden. Sie können von beliebiger Form sein, sind jedoch zumindest in einem Teilbereich der Artikelwandung kreisförmig und mit kreisförmigem Querschnitt parallel zum Artikelboden ausgebildet, um ein Verdrehen zum Verschrauben oder Verbinden eines Artikels (als Behälter) mit einem entsprechenden Gegenpart (als Deckel) zu ermöglichen.

Der jeweilige Verpackungsartikel wird als Behälter oder Behälterdeckel in einem Thermoformwerkzeug mit einem Oberwerkzeug und einem Unterwerkzeug hergestellt, die gegeneinander bewegbar sind, wobei eine Kunststofffolie zwischen Oberwerkzeug und Unterwerkzeug zugeführt wird, Ober- und Unterwerkzeug geschlossen werden und die zugeführte Kunststofffolie thermogeformt wird, wodurch der Artikel mit einer Artikelwandung und einem Artikelboden ausgeformt wird. Während des Thermoformens werden am Artikel Gewinde- oder Knaggensegmente ausgebildet, wobei sich die Gewinde- oder Knaggensegmente in umfänglicher Richtung des Artikels erstrecken und von der Artikelwandung in radialer Richtung hervorstehen.

Der thermogeformte Verpackungsartikel, wie Behälter oder Behälterdeckel mit (jeweils) Artikelboden und Artikelwandung, wird vorzugsweise hergestellt durch das oben angegebene Verfahren, wobei an dem Artikel die in radialer Richtung vorstehenden Gewindesegmente oder Knaggensegmente ausgebildet werden.

Im Verpackungssystem (Anspruch 6), aufweisend einen thermogeformten Artikel in Form eines Behälters nach der Erfindung sowie einen thermogeformten Artikel in Form eines Behälterdeckels nach der Erfindung, hat der Behälterdeckel gegenüber dem Behälter ein radiales Übermaß.

Durch das Verfahren kann ein dicht verschließbarer und insbesondere dicht wiederverschließbarer Artikel mittels Thermoformen hergestellt werden, so in Form eines Behälters und eines dazugehörigen Behälterdeckels. Die Gestalt des Artikels und insbesondere die Gewinde- oder Knaggensegmente werden vorzugsweise in einem Arbeitsgang beim Thermoformen hergestellt. Hierdurch kann der Artikel in vorteilhafter Weise mit kurzen Taktzeiten hergestellt werden.

Der Behälter weist zwei oder mehr Segmente als jeweils Gewinde- oder Knaggensegmente auf. Diese können im Falle von Gewindesegmenten einander in Höhenrichtung der Behälterwandung (in Werkzeugschließrichtung) zumindest teilweise überdecken. Bei Knaggensegmenten sind diese in umfänglicher Richtung des Artikels voneinander beabstandet angeordnet. Dies ist auch bei Gewindesegmenten möglich, in diesem Fall wird ein Gewinde mit abschnittsweisen Gewindeflanken gebildet.

Ein Gewinde- oder Knaggensegment im Sinne der Erfindung steht in radialer Richtung des Artikels von diesem, vorzugsweise von dessen Artikelwandung, ab. Es steht bevorzugt nach außen ab, kann aber auch radial nach innen in das vom Artikel umgebene Volumen vorstehen. Die Segmente erstrecken sich in umfänglicher Richtung des Artikels.

Die Gewinde- oder Knaggensegmente (wenigstens zwei) bilden bajonettverschluss- oder gewindeartige Strukturen an dem thermogeformten Artikel, die mit entsprechenden Gegenstrukturen an einem passenden Gegenpart einen Bajonettverschluss oder ein Gewinde zum Verschließen oder Wiederverschließen des Artikels formen.

Durch die nach Art eines Bajonettverschlusses oder eines Gewindes ausgebildeten Segmente wird eine nutzerseitig leicht, auch mehrfach zu schließende und zu öffnende Verbindung von geeigneter Dichtheit geschaffen.

Die Gewinde- oder Knaggensegmente werden während des Thermoformens im Thermoformwerkzeug ausgebildet. Mit besonderem Vorteil werden sie vollständig oder in ihrer kompletten fertigen Struktur während des Thermoformens ausgebildet. Es sind mehrere solche Segmente ausgebildet, die in umfänglicher Richtung des Artikels voneinander beabstandet sind. Außerdem kann die in umfänglicher Richtung des Artikels hervorstehende Struktur der Segmente während des Thermoformens ausgebildet werden, während die letztendliche Formgebung schließlich bei einem Ausstanzen des thermogeformten Artikels aus der Kunststofffolie erzeugt wird.

Gewinde- oder Knaggensegmente können zumindest abschnittsweise in der Folienebene ausgebildet werden (mit Blick auf die Kunststofffolie, die zwischen Oberwerkzeug und Unterwerkzeug zugeführt wird). In diesem Fall kann das Thermoformwerkzeug mit Vorteil einfach gestaltet sein, da aufgrund der in der Folienebene oder der Werkzeugteilungsebene liegenden Segmente ein Entformen und Auswerfen der thermogeformten Artikel aus dem Werkzeug einfach möglich ist.

Gewinde- oder Knaggensegmente können zumindest abschnittsweise parallel zur Folienebene ausgebildet sein. Alternativ oder zusätzlich dazu können sie wenigstens abschnittsweise gegenüber der Folienebene geneigt sein. Auch können sie zur Folienebene in der Werkzeugbewegungsrichtung versetzt ausgebildet werden. Im Falle geneigter oder außerhalb der Werkzeugteilungsebene ausgebildeter Segmente sind Vorkehrungen zum Entformen zu treffen. Beispielsweise kann ein Werkzeugstempel oder ähnliches Element vorgesehen sein, der während des Thermoformens oder vor dem Thermoformen radial zugestellt wird und im Werkzeug die Form für zumindest Abschnitte oder Teilbereiche der Gewinde- oder Knaggensegmente ausbildet. Zum Entformen wird der Stempel aus seiner formgebenden Stellung in eine Entformstellung gebracht, in der der thermogeformte Artikel aus dem Thermoformwerkzeug entformt oder ausgeworfen werden kann.

Eine andere Möglichkeit, Gewinde- oder Knaggensegmente zu erzeugen und entformen zu können ist wie folgt. Ober- und/oder Unterwerkzeug haben eine radiale Vertiefung oder Ausnehmung, die beim Thermoformen entlüftet wird, so dass im Thermoformwerkzeug befindliche Folie in die Vertiefung (Ausnehmung) gelangt und dabei ein Gewinde- oder Knaggensegment ausbildet. Anstelle einer oder zusätzlich zu einer Entlüftung der Vertiefung oder Ausnehmung kann eine Druckbeaufschlagung des im Werkzeug befindlichen Folienmaterials von der der Ausnehmung oder Vertiefung gegenüberliegenden Seite erfolgen. Schließlich kann nach dem Ausbilden eines Gewinde- oder Knaggensegments ein Bereich von Ober- und/oder Unterwerkzeug radial positioniert werden, um ein Entformen des Artikels aus dem Thermoformwerkzeug zu ermöglichen.

Nach dem Thermoformen der Artikel aus einer Kunststofffolie wird der geformte Artikel oder werden mehrere geformte Artikel aus der Kunststofffolie ausgestanzt. Dabei können beim Thermoformen vorgeformte Gewinde- oder Knaggensegmente letztendlich fertiggestellt werden, indem sie aus der Kunststofffolie ausgestanzt werden. Diese Form des Verfahrens ist besonders vorteilhaft, wenn die Segmente in der Folien- oder Werkzeugteilungsebene thermogeformt sind, die Fertigstellung der Segmente und das Ausstanzen des Artikels aus der Folie erfolgen einfach und schnell in einem Arbeitsgang.

Die erfindungsgemäßen thermogeformten Artikel sind in vorteilhafter Weise auf bekannten Thermoformmaschinen, insbesondere Trimm-in-place-Maschinen sowie Maschinen mit separaten Formen und Stanzen herstellbar.

Mit besonderem Vorteil kann an der dem Artikelboden (des Behälters) gegenüberliegenden Seite der Artikelwandung (des Behälters) ein umlaufender Siegelrand ausgebildet sein, der insbesondere parallel zum Artikelboden verlaufen kann. Der Verpackungsartikel kann dann zusätzlich mit einem Siegelelement, beispielsweise einer Siegelfolie, nach Art eines Originalitätsverschlusses dicht verschlossen sein oder werden.

Es ist besonders günstig, wenn die Knaggensegmente am Siegelrand angeordnet sind, insbesondere fluchtend mit diesem oder einer Siegelfläche der Siegelrandes. Ein derartiger Verpackungsbehälter kann besonders einfach hergestellt werden.

Die Gewindesegmente sind abschnittsweise parallel zum Artikelboden ausgebildet. Ein solcher paralleler Abschnitt kann einen Anlagebereich ausbilden, an dem ein Artikel und sein entsprechender Gegenpart im verschlossenen Zustand aneinander anliegen. Da der Abschnitt parallel zum Artikelboden ist, wird einem Nutzer durch einen verhältnismäßig geringen Widerstand bei Verdrehen angezeigt, dass die verschlossene Stellung erreicht ist. Des Weiteren wird ein selbstständiges Lösen oder Öffnen weitgehend verhindert.

Die Gewindesegmente sind derart ausgebildet, dass bei bestimmungsgemäßer Anordnung zueinander gehöriger Verpackungsartikel (Deckel an Behälter) neben deren gegenseitiger Verriegelung ein gegenseitiges Aufeinanderpressen erzielt wird. Hierzu sind die Gewindesegmente in Umfangsrichtung des Verpackungsartikels abschnittsweise gegenüber dem Artikelboden geneigt. Es ist ausreichend, wenn die Segmente eines von zweien füreinander bestimmten Verpackungsartikeln (Behälter oder Deckel) derart ausgebildet sind.

Zum Verschließen werden Behälter und Deckel zueinander positioniert, sodass die Segmente des Behälters in die Zwischenräume zwischen den Segmenten des Behälterdeckels eingreifen. Durch Verdrehen relativ zueinander gelangen die Segmente des Behälterdeckels in Überdeckung mit den Segmenten des Behälters, wodurch ihre Verriegelung erzielt wird. Durch die Ausbildung der Segmente in Umfangsrichtung abschnittsweise gegenüber dem Artikelboden geneigt wird beim relativen Verdrehen zusätzlich der Effekt erzielt, dass Behälter und Behälterdeckel aufeinander gepresst werden, wodurch zusätzliche Dichtwirkung erzielt werden kann.

Wenigstens ein Segment des Artikels - z.B. des Behälters und/oder des Behälterdeckels - ist in umlaufender Richtung endseitig mit einem Anschlag versehen. Dieser Anschlag definiert eine Endlage vom Artikel, z.B. Behälterdeckel, zum Gegenpart, z.B. Behälter, die bei deren Verdrehen relativ zueinander erreicht wird. Auf diese Weise wird vermieden, dass nutzerseitig beim Verschließen des Verpackungsartikels (beider Verpackungsartikel) überdreht wird und die Segmente von Behälter und Behälterdeckel nach erfolgter gegenseitiger Überdeckung erneut in benachbarte Zwischenräume einlaufen und kein sicherer Verschluss erhalten wird.

Wenigstens ein Segment des Artikels als Behälterdeckel ist in umlaufender Richtung anfangsseitig mit einer Schräge versehen. Diese Schräge ist eine Einlaufschräge oder kann als solche dienen, die ein miteinander Verhaken von Behälter und Behälterdeckel bei gegenseitigem Verdrehen sicher erreicht und das Verschließen des erfindungsgemäßen Verpackungsartikels erleichtert.

Schließlich kann wenigstens ein Segment des Artikels als Behälterdeckel eine Raststruktur aufweisen, die zum Zusammenwirken mit einem Gegenpart geeignet oder bestimmt ist und Artikel und dessen Gegenpart (Behälter und Behälterdeckel) in einer geschlossenen Stellung sperrt oder zumindest fixiert. Auf diese Weise wird wirksam verhindert, dass ein in bestimmungsgemäßer Weise geschlossener Verpackungsartikel (auf einen Behälter aufgesetzter Behälterdeckel) sich ungewollt löst.

Nach einer weiteren Ausführungsform kann an den thermogeformten Artikel eine umlaufende Verdickung ausgebildet sein, die insbesondere un-unterbrochen ist, welche Verdickung bei bestimmungsgemäßer Anordnung an einem thermogeformten Artikel als Gegenpart an einer gegenpartseitigen Fläche des Artikels angeordnet ist. Eine derartige umlaufende Verdickung verbessert eine Dichtwirkung bei verschlossenem Verpackungsartikel aufgrund der definierten Anlage von Verpackungsartikel und Verpackungsartikel-Gegenpart aneinander.

Beispielsweise kann die umlaufende Verdickung an einem Deckel (an oder auf dessen behälterseitig weisenden Fläche) ausgebildet sein, so dass die Verdickung bei bestimmungsgemäßer Anordnung des Deckels am Behälter an dessen oberen Rand oder Siegelrand oder an einer daran befestigten Siegelfolie zur Anlage kommt und ein dichtes Verschließen unterstützt. Besonders vorteilhaft ist, wenn die umlaufende Verdickung mittels 2k-Technik hergestellt ist. Dadurch kann die Verdickung aus einem im Verhältnis zum Material des übrigen Verpackungsartikels weichen und/oder elastischen Material, beispielsweise Gummi, hergestellt sein, sodass eine zusätzliche Verbesserung der Dichtwirkung erzielt wird.

Behälterdeckel und Behälter als thermogeformte Verpackungsartikel können ein radiales Deckelspiel kompensieren. Hierzu weist der Behälterdeckel mit Vorteil gegenüber dem Behälter ein radiales Übermaß auf. Hierdurch wird der Vorteil erzielt, dass etwaige Maßänderungen, beispielsweise Durchmesseränderungen, des Behälters beispielsweise durch Produktionsschwankungen im Herstellungsprozess und/oder bei einem Sterilisationsprozess vor, während oder nach einem Befüllen des Behälters mit Lebensmitteln durch ein radiales Deckelspiel kompensiert werden können.

Weitere Merkmale und Vorteile der vorliegenden Erfindung ergeben sich aus der folgenden beispielhaften Beschreibung einer besonders bevorzugten Ausführungsform der Erfindung anhand der Figuren. Dabei zeigt:
- Fig. 1: einen Behälter für einen thermogeformten Verpackungsartikel in verschiedenen Ansichten,
- Fig. 2: einen vergrößerten Abschnitt des in Fig. 1 dargestellten Behälters verschlossen mit einem entsprechenden Behälterdeckel,

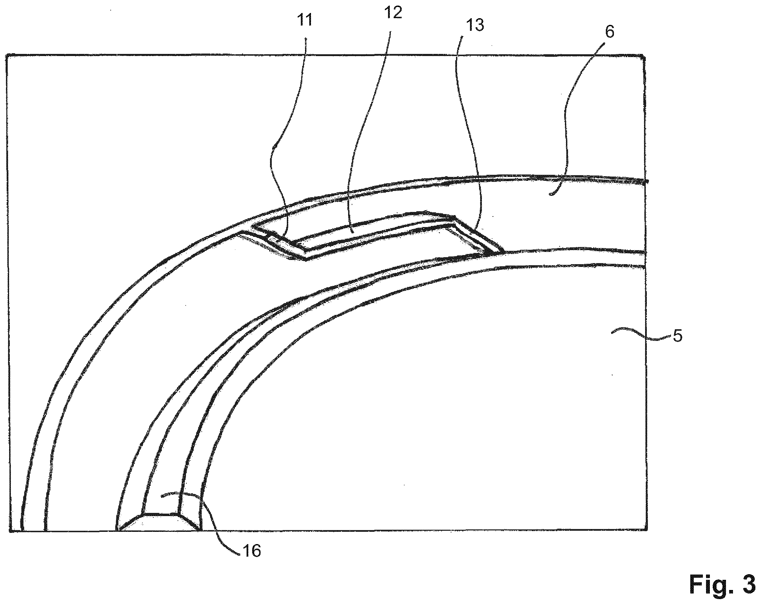

- Fig. 3: eine Detailansicht des in Fig. 2 dargestellten Behälterdeckels als Ausschnitt und,
- Fig. 4: einen vergrößerten Ausschnitt einer Aufsicht auf den Behälter mit Deckel der Fig. 2.

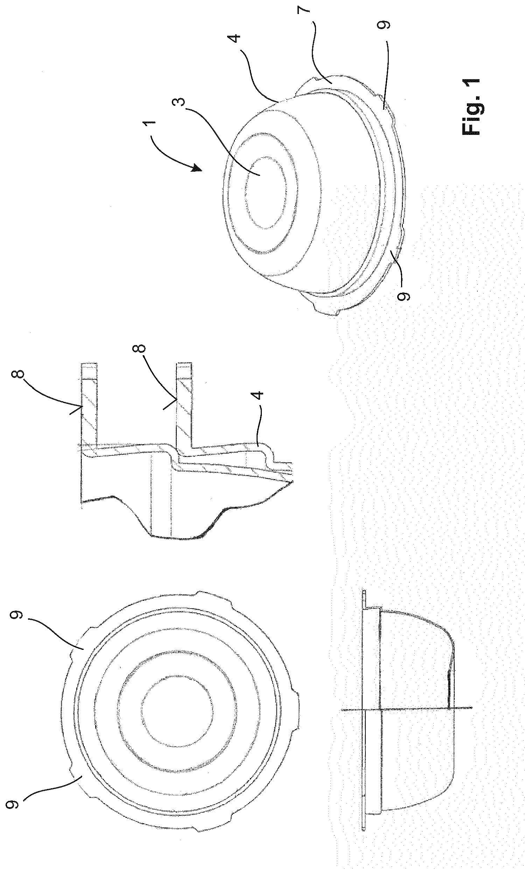

Der in Fig. 1 in verschiedenen Ansichten dargestellte Behälter 1 sowie der in Fig. 2 teilweise dargestellte Behälterdeckel 2 bilden jeweils einen thermogeformten Verpackungsartikel nach der Erfindung. Der Behälter 1 weist einen Behälterboden 3 sowie eine Behälterwandung 4 entsprechend Artikelboden und Artikelwandung auf. In entsprechender Weise weist der Behälterdeckel 2 einen Deckelboden 5 und eine Deckelwandung 6 auf.

Der Behälter 2 ist an seiner dem Behälterboden 3 gegenüberliegenden Seite der Behälterwandung 4 mit einem umlaufenden Siegelrand 7 versehen. Dieser ragt von der Behälterwandung 4 radial nach außen vor und bildet an seiner Oberseite eine Siegelfläche 8 aus. Randseitig sind am Siegelrand 7 in radialer Richtung nach außen vorstehende Knaggensegmente 9 ausgebildet. Im vorliegenden Beispiel weist der Behälter 1 insgesamt fünf Knaggensegmente 9 auf. Diese sind parallel zum Behälterboden 3 ausgerichtet und wirken bei bestimmungsgemäßer Anordnung des Behälterdeckels 2 am Behälter 1 mit am Behälterdeckel 2 ausgebildeten Gewindesegmenten 10 zusammen.

Die Gewindesegmente 10 des Behälterdeckels 2 sind an dessen Innenseite in Richtung der Behälterwandung 4 radial nach innen vorstehend ausgebildet. Jedes Gewindesegment 10 weist einen gegenüber dem Deckelboden 5 (und gegenüber dem Behälterboden 3) geneigten Einlaufbereich 11, einen zum Deckelboden 5 parallelen Abschnitt 12 sowie einen gegenüber dem Deckelboden 5 geneigten Endabschnitt 13 auf.

Der genannte Einlaufbereich 11 bildet eine Einlaufschräge für jeweils ein Knaggensegment 9 des Behälters 1. Der Behälterdeckel 2 wird zum Verschließen des Behälters 1 derart daran angeordnet, dass seine Gewindesegmente 10 jeweils zwischen die Knaggensegmente 9 des Behälters 1 gebracht werden. Liegt der Behälterdeckel 2 locker auf dem Behälter 1 auf, werden Behälter 1 und Behälterdeckel 2 relativ zueinander verdreht. Dabei gelangen die Knaggensegmente 9 jeweils mit einem Gewindesegment 10 in Eingriff. Durch den schrägen Einlaufbereich 11 wird das Einlaufen der Knaggensegmente 9 in die Gewindesegmente 10 erleichtert und der Behälterdeckel 2 axial gegen den Behälter 1 gepresst. Bei Fortführen der relativen Drehbewegung von Behälter 1 und Behälterdeckel 2 laufen die Knaggensegmente 9 vollständig in die Gewindesegmente 10 ein und kommen überdeckend mit dem parallelen Abschnitt 12 zur Ruhe. Der schräg verlaufene Endbereich 13 verhindert ein Überdrehen vom Behälterdeckel 2 zum Behälter 1. Zur Lagesicherung bei vollständig geschlossenem Behälterdeckel 2 ist am parallelen Abschnitt 12 des Gewindesegments 10 ein Rastnocken 14 vorgesehen, über den das Knaggensegment 9 läuft und in der vollständig geschlossenen Position gehalten ist.

In Fig. 2 ist dargestellt, dass der Behälter 1 mittels einer Siegelfolie 15 nach Art eines Originalitätsverschlusses dicht verschlossen ist. Die Siegelfolie 15 ist auf dem Siegelrand 7 des Behälters 1 angeordnet und an der Siegelfläche 8 abgedichtet und liegt bei mit einem Behälterdeckel 2 verschlossenem Behälter 1 zwischen Deckel und Behälter. Zur Verbesserung der Dichtwirkung ist am Behälterdeckel 2 innenseitig, das heißt an der den Behälter 1 zugewandten Seite, ein umlaufender Ringwulst 16 ausgebildet. Behälter 1 und Behälterdeckel 2 sind derart aufeinander abgestimmt, dass bei geschlossenem Behälterdeckel 2 der Ringwulst 16 unter elastischer Deformation des Behälterdeckels 2 dichtend auf die Siegelfolie 15 gepresst ist.

Wie insbesondere in Fig. 2 dargestellt ist, besteht bei bestimmungsgemäßer Anordnung des Behälterdeckels 2 am Behälter 1 zwischen diesen ein Radialspalt 17. Durch diesen können Durchmesseränderungen des Behälters 1 beispielsweise aufgrund von Prozessschwankungen im Herstellungsprozess und/oder aufgrund eines Sterilisationsprozesses durch radiales Deckelspiel kompensiert werden.

### Bezugszeichenliste.

- 1: Behälter
- 2: Behälterdeckel
- 3: Behälterboden
- 4: Behälterwandung
- 5: Deckelboden
- 6: Deckelwandung
- 7: Siegelrand
- 8: Siegelfläche
- 9: Knaggensegment
- 10: Gewindesegment
- 11: Einlaufbereich
- 12: paralleler Abschnitt
- 13: Endbereich
- 14: Rastnocken
- 15: Siegelfolie
- 16: Ringwulst
- 17: Radialspalt

## Patentansprüche

1. **Verpackungssystem,** aufweisend einen thermogeformten Behälter (1;3,4), mit einem Behälterboden (3) und einer Behälterwandung (4) sowie einen thermogeformten Behälterdeckel (2;5,6), mit einem Deckelboden (5) und einer Deckelwandung (6);
- wobei an dem Behälter (1;3,4) wenigstens ein in radialer Richtung vorstehendes Knaggensegment (9) ausgebildet ist; und
- das wenigstens eine Knaggensegment (9) wenigstens abschnittsweise parallel zum Behälterboden (3) ausgebildet ist;
- wobei an der dem Behälterboden (3) gegenüberliegenden Seite der Behälterwandung (4) ein umlaufender Siegelrand (7) ausgebildet ist;
- wobei an dem Behälterdeckel (2;5,6) wenigstens ein in radialer Richtung vorstehendes Gewindesegment (10) ausgebildet ist; und
- wobei das wenigstens eine Gewindesegment (10) wenigstens abschnittsweise parallel zum Deckelboden (5) ausgebildet ist und zumindest abschnittsweise gegenüber dem Deckelboden (5) geneigt ist,
**dadurch gekennzeichnet, dass**
der Behälter (1,3,4) mittels einer Siegelfolie (15) nach Art eines Originalitätsverschlusses dicht verschlossen ist und dass
die Siegelfolie (15) auf dem Siegelrand (7) des Behälters (1,3,4) angeordnet ist und an einer Siegelfläche (8) abdichtet und bei mit dem Behälterdeckel (2) verschlossenem Behälter (1,3,4) zwischen Deckel und Behälter liegt und dass
zur Verbesserung der Dichtwirkung am Behälterdeckel (2) innenseitig, das heißt an der den Behälter (1,3,4) zugewandten Seite, ein umlaufender Ringwulst (16) ausgebildet ist und Behälter (1,3,4) und Behälterdeckel (2) derart aufeinander abgestimmt sind, dass bei geschlossenem Behälterdeckel (2) der Ringwulst (16) unter elastischer Deformation des Behälterdeckels (2) dichtend auf die Siegelfolie (15) gepresst ist.

2. Verpackungssystem nach Anspruch 1, wobei das wenigstens eine Gewinde- oder Knaggensegment (9,10) in umlaufender Richtung des Behälters (1;3,4) oder des Behälterdeckels (2;5,6) endseitig mit einem Anschlag (13) und/oder in umlaufender Richtung des Behälters (1;3,4) oder des Behälterdeckels (2;5,6) anfangsseitig mit einer Einlaufschräge (11) versehen ist.

3. Verpackungssystem nach einem der Ansprüche 1 oder 2, wobei das wenigstens eine Gewinde- oder Knaggensegment (9,10) eine Raststruktur (14) aufweist, die zum Zusammenwirken mit einem Gegenpart geeignet ist und Behälter (1;3,4) oder Behälterdeckel (2;5,6) und Gegenpart in einer geschlossenen Stellung sperrt oder zumindest fixiert.

4. Verpackungssystem nach einem der Ansprüche 1 bis 3, wobei mehrere Gewinde- oder Knaggensegmente (9,10) ausgebildet sind, die in umfänglicher Richtung des Behälters (1;3,4) oder des Behälterdeckels (2;5,6) voneinander beabstandet sind.

5. Verpackungssystem nach einem der Ansprüche 1 bis 4, wobei der Behälterdeckel (2;5,6) gegenüber dem Behälter (1;3,4) ein radiales Übermaß aufweist.

6. Verpackungssystem nach einem der Ansprüche 1 bis 5, wobei das radiale Übermaß in Form eines Radialspaltes (17) zwischen einem Gewinde- oder Knaggensegment (9,10) und dem Behälterdeckel (2;5,6) ausgebildet ist.

## Claims

1. **Packaging system,** comprising a thermoformed container (1;3,4), having a container base (3) and a container wall (4), and a thermoformed container lid (2;5,6), having a lid base (5) and a lid wall (6);
- wherein at the container (1;3,4) at least one catch segment (9) is formed projecting in a radial direction; and
- the at least one catch segment (9) is formed at least partially parallel to the container base (3);
- wherein a circumferential sealing edge (7) is formed at the side of the container wall (4) opposite to the container base (3);
- wherein at the container lid (2;5,6) at least one threaded segment (10) is formed projecting in a radial direction; and
- wherein the at least one threaded segment (10) is formed at least partially parallel to the container base (5) and is inclined at least partially with respect to the container base (5),
**characterised in that**
the container (1,3,4) is tightly sealed in the manner of an originality seal by means of a sealing film (15) and **in that**
the sealing film (15) is arranged at the sealing edge (7) of the container (1, 3, 4), sealing at a sealing surface (8) and is located between lid and container when the container (1,3,4) is closed with the container lid (2) and **in that**
for improvement of the sealing effect at the container lid (2) on the inside, which means on the side facing the container (1,3,4), a circumferential annular bead (16) is formed and container (1,3,4) and container lid (2) are matched to each other in such a manner that, when the container lid (2) is closed, the annular bead (16) is pressed onto the sealing film (15) in a sealing manner while elastically deforming the container lid (2).

2. Packaging system according to claim 1, wherein the at least one threaded or catch segment (9, 10) in circumferential direction of the container (1;3,4) or the container lid (2;5,6) is provided with a stop (13) on its end and/or in circumferential direction of the container (1;3,4) or the container lid (2;5,6) with an entry slope (11) on its beginning.

3. Packaging system according to any one of claims 1 or 2, wherein the at least one threaded or catch segment (9,10) has a latching structure (14) suited for cooperation with a counterpart, locking or at least fixing container (1, 3, 4) or container lid (2, 5, 6) and counterpart in a closed position.

4. Packaging system according to any one of claims 1 to 3, wherein several threaded or catch segments (9,10) are formed that are spaced from each other in circumferential direction of the container (1;3,4) or the container lid (2;5,6).

5. Packaging system according to any one of claims 1 to 4, wherein the container lid (2;5,6) has a radial oversize with regard to the container (1;3,4).

6. Packaging system according to any one of claims 1 to 5, wherein the radial oversize is formed as a radial gap (17) between a threaded or catch segment (9,19) and the container lid (2, 5, 6).

## Revendications

1. Système d'emballage, présentant un contenant thermoformé (1; 3, 4), avec un fond de contenant (3) et une paroi de contenant (4), ainsi qu'un couvercle de contenant thermoformé (2; 5, 6), avec un fond de couvercle (5) et une paroi de couvercle (6);
- dans lequel au moins un segment à taquets (9) saillant en direction radiale est formé sur le contenant (1; 3, 4); et
- ledit au moins un segment à taquets (9) est au moins partiellement parallèle au fond de contenant (3) ;
- dans lequel un bord à sceller périphérique (7) est formé sur le côté de la paroi de contenant (4) opposé au fond de contenant (3);
- dans lequel au moins un segment fileté (10) saillant en direction radiale est formé sur le couvercle de contenant (2; 5, 6); et
- dans lequel ledit au moins un segment fileté (10) est au moins partiellement parallèle au fond de couvercle (5) et est au moins partiellement incliné par rapport au fond de couvercle (5),
**caractérisé en ce que**
le contenant (1, 3, 4) est fermé de façon étanche par un film à sceller (15) à la manière d'une fermeture inviolable, et
le film à sceller (15) est disposé sur le bord à sceller (7) du contenant (1, 3, 4) et est rendu étanche à une face de scellage (8), et se trouve entre le couvercle et le contenant lorsque le contenant (1, 3, 4) est fermé avec le couvercle de contenant (2), et
pour améliorer l'étanchéité au couvercle de contenant (2), un bourrelet annulaire périphérique (16) est formé sur le côté intérieur, c'est-à-dire sur le côté tourné vers le contenant (1, 3, 4), et le contenant (1, 3, 4) et le couvercle de contenant (2) sont adaptés l'un à l'autre de telle manière que, lorsque le couvercle de contenant (2) est fermé, le bourrelet annulaire (16) soit pressé de façon étanche sur le film à sceller (15) avec une déformation élastique du couvercle de contenant (2).

2. Système d'emballage selon la revendication 1, dans lequel ledit au moins un segment fileté ou à taquets (9, 10) est muni d'une butée (13) à l'extrémité dans la direction périphérique du contenant (1; 3, 4) ou du couvercle de contenant (2; 5, 6) et/ou d'une rampe d'accès (11) au début dans la direction périphérique du contenant (1; 3, 4) ou du couvercle de contenant (2; 5, 6) .

3. Système d'emballage selon une des revendications 1 ou 2, dans lequel ledit au moins un segment fileté ou à taquets (9, 10) présente une structure à baïonnette (14), qui est apte à coopérer avec une pièce opposée et qui bloque ou au moins fixe le contenant (1; 3, 4) ou le couvercle de contenant (2; 5, 6) et la pièce opposée dans une position fermée.

4. Système d'emballage selon l'une quelconque des revendications 1 à 3, dans lequel sont formés plusieurs segments filetés ou à taquets (9, 10), qui sont espacés l'un de l'autre dans la direction périphérique du contenant (1; 3, 4) ou du couvercle de contenant (2; 5, 6) .

5. Système d'emballage selon l'une quelconque des revendications 1 à 4, dans lequel le couvercle de contenant (2; 5, 6) présente une sur-dimension radiale par rapport au contenant (1; 3, 4).

6. Système d'emballage selon l'une quelconque des revendications 1 à 5, dans lequel la sur-dimension radiale est réalisée sous la forme d'une fente radiale (17) entre un segment fileté ou à taquets (9, 10) et le couvercle de contenant (2; 5, 6).
